# EUROPEAN PATENT SPECIFICATION

(11) **EP 1 690 624 B1**
(45) Date of publication and mention of the grant of the patent: **01.01.2014**
(21) Application number: 05425075.8
(22) Date of filing: 15.02.2005
(51) Int. Cl.: B23K 11/00

(54) **Accessory for a welding head for rail welding and manufacturing method.**
Zubehör eines Schweisskopf zum Schweissen von Schienen und Verfahren zur Herstellung dieses Zubehör.
Accessoire pour tête de soudage pour soudage de rails et méthode de fabrication.

(43) Date of publication of application: 16.08.2006
(73) Proprietor: Vaia Car S.p.A., 25012 Calvisano (Brescia) (IT)
(72) Inventor: Vaia, Davide, 25012 Calvisano (Brescia) (IT)
(74) Representative: Crippa, Paolo Ernesto

(56) References cited:
- EP-A- 0 597 215
- GB-A- 2 219 761
- US-A- 4 929 816

## Description

The present invention relates to a welding head for welding rails by the spark-forging method, or induction welding according to claim 1, and a method for manufacturing a welding head according to claim 13.

A welding head of known type integrally comprises two aligned half-heads slidingly movable relative to one another by one or more main oil-pressure jacks. Each half-head usually comprises a frame with two levers actuable by a secondary oil-pressure jack to respectively grip the end of one of the two rails to be connected by welding. The half-heads are also provided with suitable electrodes 6 for applying the welding current to the rail ends.

During the welding operation, thanks to the high induction caused by the current, the two ends of the rails heat up to the melting point and, after an initial pre-heating step, the two ends are squashed against each other so that the so-called upsetting or forging of the connecting portion occurs at the same time as their continued progressive melting. Such approach of the ends of the two rails, which is carried out by actuating the main oil-pressure jacks, requires a very high pulling or traction strength, which mainly depends on the length of the same rail and on the friction between the rail and the same rail and on the friction between the rail and the sleepers and/or the ballast.

The pulling strength required for most butt welds of rails currently carried out is about 500 kN. In an attempt at speeding up the operations for laying and maintaining railway lines, the length of the single rail profiles to be connected by welding has been increased. However, such increase of the rail profile length also implies an increase of the friction that must be overcome by the pulling strength of the welding head to move the rail ends close to one another during the welding operation.

To increase the pulling strength of the welding head it is necessary to replace the entire welding head with a new, more powerful welding head or replace, into an existing welding head, the original oil-pressure jack with a more powerful oil-pressure jack.

US-A-4929816 shows a welding head having two welding halves, movable towards and away from each other in a direction of the rail, and parallel hydraulic cylinders for moving the two welding head halves in said direction, a pair of clamping and welding jaws on each welding head half, and a hydraulic clamping cylinder connecting the jaws of each pair, and an apparatus for tensioning or longitudinally sliding the rail, the apparatus being associated in parallel with the welding head for encompassing the welding head, the apparatus being associated externally and in parallel with the welding head for encompassing the welding head in a horizontal plane passing through the rail and comprising two pairs of rail clamping jaws for engaging adjacent rail section ends immediately ahead of, and behind, the welding head, the welding head, and a separate hydraulic cylinder-piston arrangement extending in the direction of the rail and comprising respective separate and disposed in parallel operating cylinders connecting the pairs of rail clamping jaws for operation thereof.

Since the cost of a welding head is high and the normal operating life of a welding head is very long, a replacement of the entire welding head would imply both a high cost for purchasing the new welding head and the loss of years or decades of amortisation of the investment made with the purchase of the old welding head.

The replacement of the original oil-pressure, jack with a new, more powerful one inside a welding head implies several disadvantages, related on the one side to the need of removing the original jack from the assembly of the structure carrying the welding head, with the risk of impairing its mechanical resistance, and on the other side related to problems of overall dimensions, for example due to the larger diameter of the more powerful jack, which is normally incompatible with the shape of the original structure of the welding head. A series of changes to the half-head carrying structure is therefore unavoidable to replace the main oil-pressure jack with a new more powerful one.

Since with machines or installations that have to stand high mechanical stresses any changes to the original carrying structure are regarded as very dangerous, the replacement of the main oil-pressure jack is not accepted as a satisfactory alternative to the expensive replacement of the entire welding head.

The object of the present invention therefore is to provide an accessory 15 which allows increasing the pulling strength in existing welding heads without changing the carrying structure of the existing welding head.

A further object of the present invention is to provide a method for equipping an existing welding head with the above accessory 15 so as to increase its pulling strength without changing the carrying structure of the existing welding head.

A further object of the present invention is to provide a welding head for welding rails having a high pulling capability compared to an existing welding head and being manufactured using said existing welding head without intervening on the carrying structure in the area of structural interaction between the oil-pressure and the half-heads of the existing welding head.

These and other objects are achieved by an accessory for a welding head for welding the ends of two rail profiles according to claim 1.

The above objects are further achieved by a method for manufacturing a welding head for welding the ends of two rail profiles according to claim 12.

The above objects are further achieved by a welding head for welding the ends of two rail profiles according to claim 11.

To better understand the invention and appreciate its advantages, some exemplary non-limiting embodiments thereof will now be described with reference to the annexed figures, wherein:

figure 1 is a perspective view of a welding head according to the invention;

figures 2 and 3 are views of a self-propelled machine for welding rails provided with the welding head according to the invention;

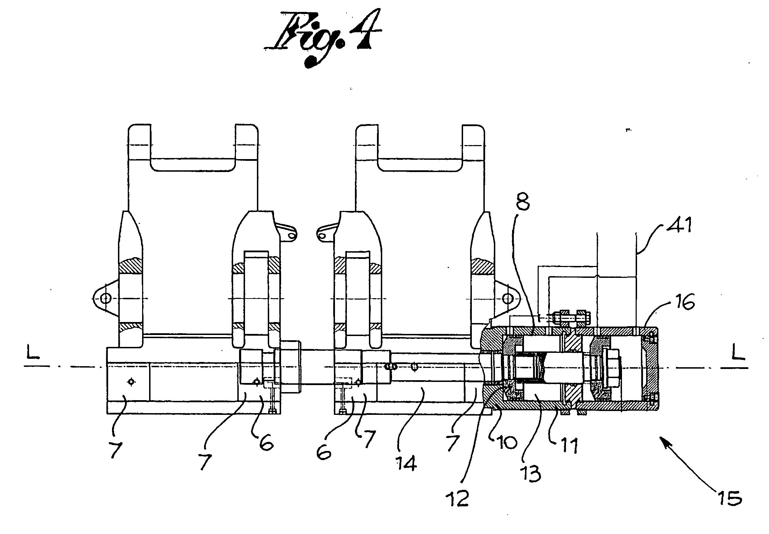

figure 4 is a longitudinal section view of a welding head according to the invention;

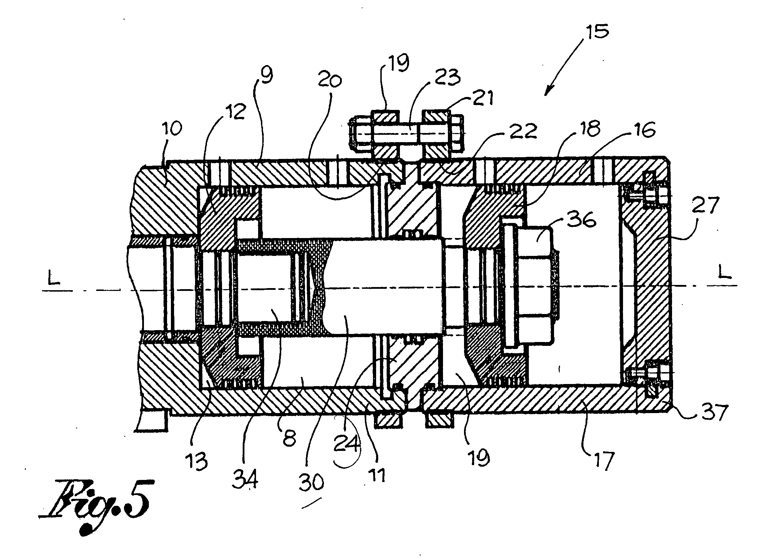

figure 5 is an enlarged view of a detail of the welding head according to the invention;

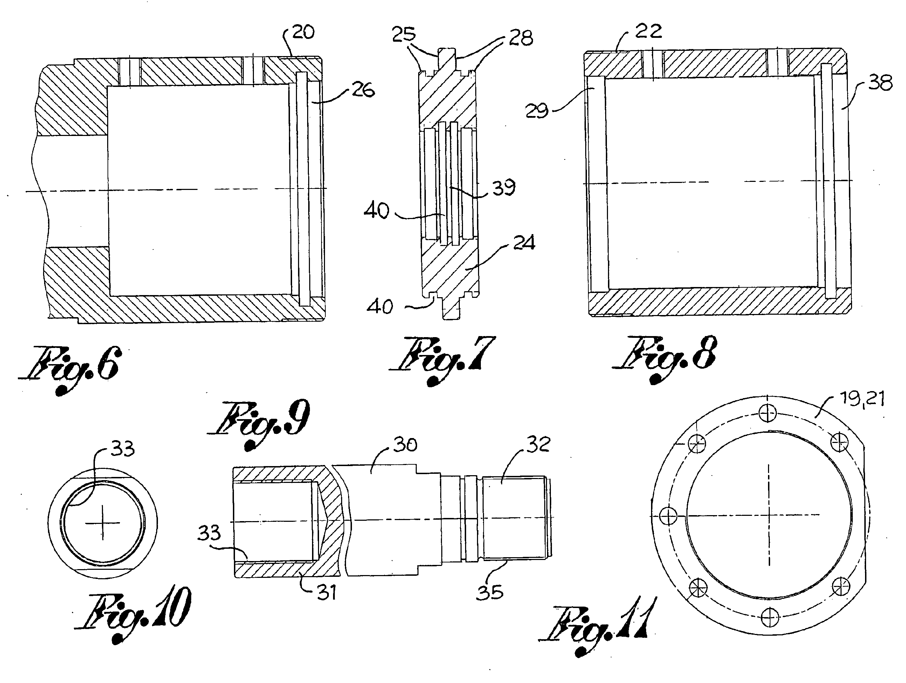

figure 6 is a longitudinal section view of a main cylinder of the welding head according to the invention;

figure 7 is a longitudinal section view of a centring member of the welding head according to the invention;

figure 8 is a longitudinal section view of an additional cylinder 17 of the welding head according to the invention;

figure 9 is a partly longitudinal section view of an additional stem of the welding head according to the invention;

figure 10 is a front view of the additional stem of figure 9;

figure 11 is a front view of a connecting flange of the welding head according to the invention; and

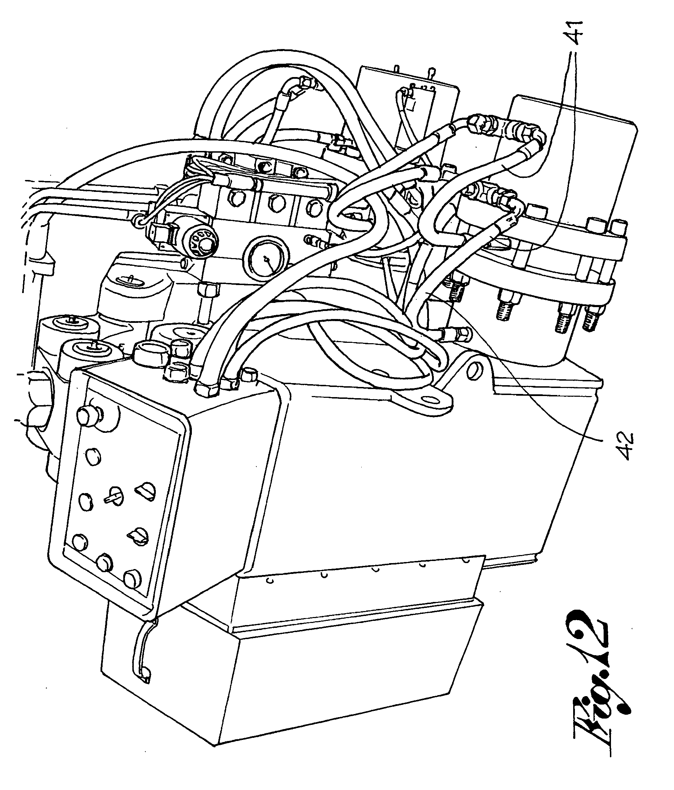

figure 12 is an enlarged perspective view of a detail of the welding head according to the invention.

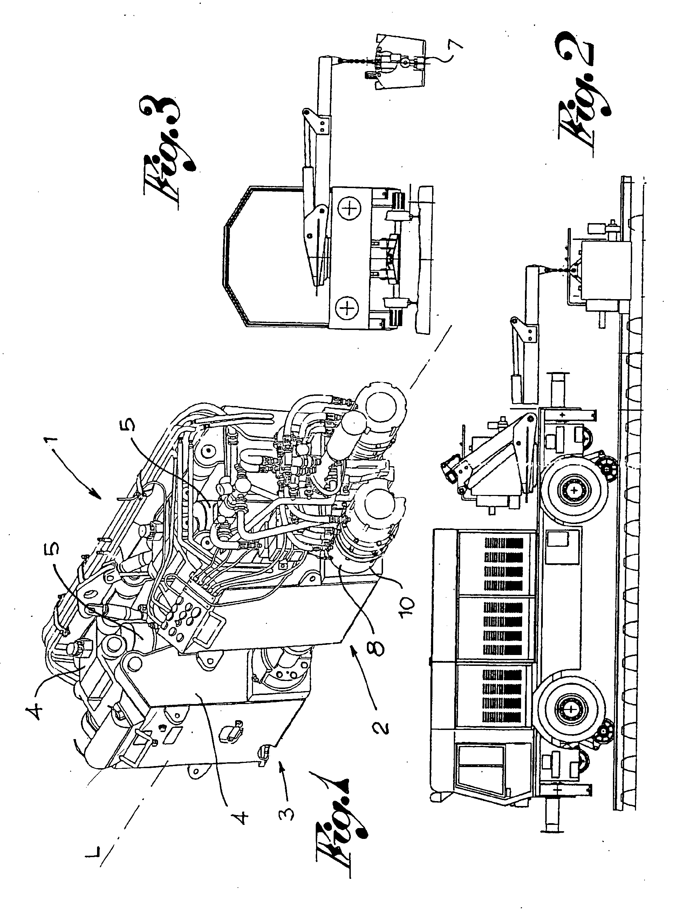

With reference to figure 1, a welding head for welding the ends of two rail profiles is globally indicated with reference numeral 1.

The welding head 1 comprises two half-heads 2, 3 aligned with one another and slidingly movable relative to one another in a longitudinal direction L. Each half-head exhibits gripping means, for example two levers 4 provided with pressure portions 7 and actuated by a secondary oil-pressure jack 5 for respectively gripping one of the two rail profiles. The welding head 1 further comprises an electrical welding circuit with at least two electrodes 6 and suitable connecting means for connecting a first electrode of the two electrodes 6 to the first profile and a second electrode of the two electrodes 6 to the second profile.

Advantageously, electrodes 6 are directly obtained from the pressure portions 7 so as to ensure strict contact of the electrodes with the rail profile.

The welding head 1 further comprises at least one main oil-pressure jack 8 with a main cylinder 9 connected by a connecting portion 10 to the first half-head 2 and having a free portion 11 protruding from the first head substantially in the longitudinal direction L.

The main oil-pressure jack 8 further comprises a main piston 12 slidingly movable by a pressurised fluid inside a seat 13 formed in the main cylinder 9 and connected, by a tractive stem 14 to the second half-head 3, so that the main oil-pressure jack 8 can move the two half-heads 2, 3 close to one another along the longitudinal direction L.

According to the invention, the welding head 1 described so far is equipped with at least one, preferably two accessories 15 for increasing the pulling strength of the preferably two main oil-pressure jacks 8.

Accessory 15 comprises an additional oil-pressure jack 16 with an additional cylinder 17 and an additional piston 18 slidingly movable by a pressurised fluid inside a seat 19 formed in the additional cylinder 17.

Accessory 15 further comprises means for connecting the additional cylinder 17 to the free portion 11 of the main cylinder 9 and means for connecting the additional piston 18 to the tractive stem 14, so that the additional oil-pressure jack 16 can impart additional traction strength to the tractive stem 14.

Advantageously, the means for connecting the additional cylinder 17 to the free portion 11 of the main cylinder 9 comprise a first connecting flange 19 screwable on a first outer threading 20 formed on the free portion 11 of the main cylinder and a second connecting flange 21 screwable on a second outer threading 22 formed on the additional cylinder 17, wherein said connecting flanges 19, 21 are connectable to one another by a plurality of screws 23.

According to an embodiment, a centring plate 24 is also provided, with a first centring surface 25 having shape substantially complementary to a seat 26 for a closing lid 27 formed in the free portion 11 of the main cylinder 9 and adapted for abutting against this seat 26. The centring plate 24 further comprises a second centring surface 28 opposed to the first centring surface 25 and adapted for abutting against a centring seat 29 of the additional cylinder, so as to align the additional cylinder 17 with the main cylinder 9. This advantageously allows obtaining the connecting flanges and the respective threads with normal tolerances and carrying out a precise alignment of the two cylinders just by the centring plate.

The above means for connecting the additional piston 18 to the tractive stem 14 preferably comprise an additional stem 30 provided with a first end 31 intended to be connected to the tractive stem 14 and a second end 32 intended to be connected to the additional piston 18. The first end 31 is advantageously provided with an inner threading 33 that allows screwing the additional stem 30 onto an outer threaded end 34 of the tractive stem 14.

According to an embodiment, the first end 31 is formed so as to realise a nut adapted for tightening the main piston 12 against a seat of the tractive stem 14 for obtaining the connection between the main piston 12 and the tractive stem 14.

The second end 32 of the additional stem 30 exhibits an outer threading 35 similar to the outer threading of end 34 of the tractive stem 14, so that a nut 36 for attaching the main piston 12 to the tractive stem 14 may also be used for attaching the additional piston 18 to the additional stem 30.

According to a further embodiment, the free portion 37 of the additional cylinder exhibits a seat 38 with shape substantially identical to said seat 26 for the closing lid 27 of the free portion 11 of the main cylinder 9. This advantageously allows using the closing lid 27 for closing the opening of the free portion 37 of the additional cylinder 17.

Advantageously, the centring plate 24 delimits a central opening 39 through which the additional stem 30 extends, so that the centring plate 24 also forms a guide for the additional stem 30.

The centring plate is also provided with a plurality of annular seats 40 for gaskets, for example O-Rings, and advantageously serves as wall partly delimiting the seat for the additional piston 18, that is to say, a pressurised fluid chamber for actuating the additional oil-pressure jack.

Accessory 15 further comprises a duct system 41 for the pressurised fluid of the additional oil-pressure jack 16 and means, for example suitable valves for connecting the duct system 41 to the oil-pressure actuating system 42 of the main oil-pressure jack 8. In this way it is possible to obtain a synchronised actuation of the main oil-pressure jack 8 and of the additional oil-pressure jack 16 connected to it.

According to a preferred embodiment, the welding head 1 comprises two main oil-pressure jacks and each main jack is associated to an accessory so that the additional oil-pressure jacks of said accessories may impart additional traction strength to each tractive stem 14.

Below is the description of the manufacture of a welding head 1 with a high pulling strength starting from an existing welding head 1.

An existing welding head 1 is equipped with accessory 15 connecting the additional cylinder 17 of the additional jack to the free portion 11 of the main cylinder 9 of the main jack 8 and connecting the additional piston 18 by the additional stem 30 to the tractive stem 14, so that the additional oil-pressure jack may impart the additional pulling strength to the tractive stem 14.

To obtain such connections, the first outer threading 20 is formed on the free portion 11 of the main cylinder 9 and the second outer threading 22 is formed on the additional cylinder 17. Afterwards, the internally threaded connecting flanges 19, 21 are screwed on the outer threads 20, 22 of the main 9 and additional cylinders 17 and the two connecting flanges are in turn connected to one another by screws 23.

The connection of the main 9 and additional cylinders 17 advantageously occurs by the interposition of the centring plate as already described above, that is to say, the centring plate is arranged between the main cylinder 9 and the additional cylinder 17, so as to align them by said centring plate.

The closing lid 27 from the free portion of the main cylinder detaches from the free portion of the main cylinder 9 prior to the connection with the additional cylinder 17 and is advantageously reused as closing lid for the additional cylinder 17.

The connection between the additional piston and the tractive stem is obtained by screwing the additional stem 30 on the threaded free end 34 of the tractive stem 14, wherein the additional stem also tightens the main piston against the seat of the tractive stem.

Afterwards, the main piston 7 is connected to the tractive stem 14 by tightening the main piston against a seat of the tractive stem by screwing the additional stem 30 on the threaded free end 34 of the tractive stem 14.

Moreover, the additional stem 30 is inserted into a central opening 39 of the centring plate 24 so as to obtain a guide and a centring of the additional stem through said centring member.

Afterwards, the additional stem 30 is connected to the additional piston by screwing.

The synchronised actuation of the main oil-pressure jack 8 and of the additional oil-pressure jack 16 connected to it is afterwards obtained by connecting ducts 41 for the pressurised fluid of the additional oil-pressure jack to the oil-pressure actuating system 42 of the main oil-pressure jack.

Afterwards, the manufacturing method described is applied to all main oil-pressure jacks of the welding head 1.

According to an advantageous aspect of the present invention, accessory 15 is applied to the welding head 1 to increase the pulling strength of the same welding head 1.

Advantageously, therefore, the operations for laying and maintaining railway lines are speeded up, thus allowing the use also of very long single rail profiles to be connected by welding.

In fact, with accessory 15, the pulling strength of the welding head 1 easily overcomes the friction to move the ends of the rails close to one another during the welding operation.

According to a further advantageous aspect, providing for accessory 15 to be associated to the welding head 1, thus avoiding the replacement of the entire welding head 1, is advantageous as regards costs and times.

In fact, advantageously, the original jack in the assembly of the structure carrying the welding head 1 is not replaced, thus preserving its mechanical resistance.

Moreover, accessory 15 associated to the welding head 1 avoids problems of large overall dimensions.

Advantageously, therefore, accessory 15 is fitted without several changes to the carrying structure of the half-heads being needed.

In fact, accessory 15 allows increasing the pulling strength in existing welding heads without changing the carrying structure of the existing welding head 1.

Advantageously, moreover, accessory 15 is associated by the manufacturing method described, to the welding head 1, and then it is easily removed to be associated to a further welding head.

The method for equipping an existing welding head 1 with the above accessory so as to increase its pulling strength without changing the carrying structure of the existing welding head 1, that is, without intervening on the carrying structure in the area of structural interaction between the oil-pressure jack and the half-heads of the existing welding head 1, is therefore very advantageous.

It is clear that a man skilled in the art may make several changes and adjustments to the welding head for welding rails by the spark-forging method or induction welding according to the present invention in order to meet specific and incidental needs, as well as to the method for equipping an existing welding head 1 with the above accessory 15 so as to increase its pulling strength without changing the carrying structure of the existing welding head, according to the present invention, all falling within the scope of protection defined in the following claims.

## Claims

1. Welding head (1) for welding the ends of two rail profiles, wherein said welding head (1) comprises:
- two half-heads (2, 3) aligned with one another and slidingly movable relative to one another in a longitudinal direction, wherein a first half-head of the two half-heads (2, 3) exhibits gripping means for respectively gripping a first profile of the two rail profiles and a second half-head of the two half-heads (2, 3) exhibits gripping means for respectively gripping a second profile of the two rail profiles;
- an electrical welding circuit with at least two electrodes (6) and suitable connecting means for connecting a first electrode of the two electrodes (6) to the first profile and a second electrode of the two electrodes (6) to the second profile;
- at least one main oil-pressure jack (8) comprising a main cylinder (9) connected to said first half-head and having a free portion (11) protruding from the first half-head in the longitudinal direction, as well as a main piston (12) slidingly movable by a pressurised fluid inside a seat (13) formed in the main cylinder (9) and connected, by at **least one** tractive stem (14), to the second half-head, so that the main oil-pressure jack (8) can move the two half-heads (2, 3) close to one another along the longitudinal direction;
**characterised in that** said welding heed (1) comprises an additional oil-pressure jack (16) connected to the same at least one tractive stem (14) that is connected with said main jack (8), said additional oil-pressure jack (16) comprising:
- an additional cylinder (17) and an additional piston slidingly movable by a pressurised fluid inside a seat formed in the additional cylinder (17);
- means for connecting the additional cylinder (17) to the free portion (11) of the main cylinder (9) and means for connecting the additional piston (18) to said at lest one tractive stem (14), so that the additional oil-pressure jack (16) can impart an additional traction strength to said at lest one tractive stem (14).

2. Welding head (1) according to claim 1, wherein said means for connecting the additional cylinder (17) to the free portion (11) of the main cylinder (9) comprise a first connecting flange screwable on a first outer threading (20) formed on the free portion (11) of the main cylinder (9) and a second connecting flange screwable on a second outer threading formed on the additional cylinder (17), wherein said connecting flanges are connectable to one another by a plurality of screws (23).

3. Welding head (1) according to claim 1 or 2, wherein said means for connecting the additional cylinder (17) to the free portion (11) of the main cylinder (9) comprise a centring plate (24) comprising:
- a first centring surface (25) of shape substantially complementary to a seat (26) for a closing lid (27) formed in the free portion (11) of the main cylinder (9) and adapted for abutting against said seat (26);
- a second centring surface (28) adapted for abutting against a centring seat (29) of the additional cylinder (17), so as to align the additional cylinder (17) with the main cylinder (9).

4. Welding head (1) according to any one of the previous claims, wherein said means for connecting the additional piston to the tractive stem (14) comprise an additional stem (30) provided with a first end intended to be connected to the tractive stem (14) and a second end (32) intended to be connected to the additional piston, said first end (31) being provided with an inner threading (33) that allows screwing the additional stem (30) on an externally threaded end (34) of the tractive stem (14).

5. Welding head (1) according to claim 4, wherein said first end (31) of the additional stem (30) is formed so as to realise a nut (36) adapted for tightening the main piston (12) against a seat of the tractive stem (14) for obtaining the connection between the main piston (12) and the tractive stem (14).

6. Welding head (1) according to claim 4 or 5, wherein the second end (32) of the additional stem (30) exhibits an outer threading (35) similar to the outer threading of the free end of the tractive stem (14), so that a nut (36) for attaching the main piston (12) to the tractive stem (14) may be used for attaching the additional piston (18) to the additional stem (30).

7. Welding head (1) according to any one of the previous claims, wherein a free portion (11) of the additional cylinder (17) exhibits a seat (38) with shape substantially identical to said seat (26) for a closing lid (27) of the free portion (11) of the main cylinder (9), so that said closing lid (27) of the main cylinder (9) may be used for closing the opening of the free portion (37) of the additional cylinder (17).

8. Welding head (1) according to any one of claims from 3 to 7, wherein said centring plate (24) comprises a central opening (39) through which said additional stem (30) extends, so that the centring plate (24) also forms a guide for the additional stem (30).

9. Welding head (1) according to any one of claims from 3 to 8, wherein said centring plate (24) partly delimits a pressurised fluid chamber for actuating said additional oil-pressure jack (16).

10. Welding head (1) according to any one of the previous claims, comprising a duct system (41) for the pressurised fluid of the additional oil-pressure jack (16) and means for connecting said duct system (41) to the oil-pressure actuating system (42) of the main oil-pressure jack (8), so as to obtain a synchronised actuation of the main oil-pressure jack (8) and of the additional oil-pressure jack (16) connectable to it.

11. Welding head (1) according to claim 1, wherein said welding head (1) is equipped with two main oil-pressure jacks (8) directly coupled with two accessories (15) for increasing the pulling strength of the two main oil-pressure jacks (8).

12. Welding head (1) according to claim 1 or 11, wherein said welding head (1) comprises two main oil-pressure jacks (8) and each main jack is directly associated to an accessory (15) so that the additional oil-pressure jacks (16) of said accessories may impart additional traction strength to the same tractive stem (14) of each main oil-pressure jacks (8).

13. Method for manufacturing a welding head (1) for welding the ends of two rail profiles, comprising the following steps:
A) providing a welding head (1) comprising:
- two half-heads (2, 3) aligned with one another and slidingly movable relative to one another in a longitudinal direction, wherein a first half-head of the two half-heads (2, 3) exhibits gripping means for respectively gripping a first profile of the two rail profiles and a second half-head of the two half-heads (2, 3) exhibits gripping means for respectively gripping a second profile of the two rail profiles;
- an electrical welding circuit with at least two electrodes (6) and suitable connecting means for connecting a first electrode of the two electrodes (6) to the first profile and a second electrode of the two electrodes (6) to the second profile;
- at least one main oil-pressure jack (8) comprising a main cylinder (9) connected to said first half-head and having a free portion (11) protruding from the first half-head in the longitudinal direction, as well as a main piston (12) slidingly movable by a pressurised fluid inside a seat (13) formed in the main cylinder (9) and connected, by a tractive stem (14), to the second half-head, so that the main oil-pressure jack (8) can move the two half-heads (2, 3) close to one another along the longitudinal direction;
B) providing an additional oil-pressure jack (16) comprising an additional cylinder (17) and an additional piston slidingly movable by a pressurised fluid inside a seat formed in the additional cylinder (17);
C) connecting the additional cylinder (17) to the free portion (11) of the main cylinder (9);
D) connecting the additional piston by an additional stem (30) to the same tractive stem (14) where is connected the main oil-pressure jack (8), so that the additional oil-pressure jack (16) can impart an additional traction strength to the same tractive stem (14).

14. Method according to claim 13, wherein at step B), a first outer threading (20) is formed on the free portion (11) of the main cylinder (9) and a second outer threading (35) is formed on the additional cylinder (17), and wherein a first internally threaded connecting flange is screwed on the first threading of the main cylinder (9) and a second internally threaded connecting flange is screwed on the second threading of the additional cylinder (17),
and wherein said two connecting flanges are connected to one another by a plurality of screws (23) so as to obtain said connection between the main cylinder (9) and the additional cylinder (17).

15. Method according to claim 13 or 14, comprising the step of arranging a centring plate (24) between the main cylinder (9) and the additional cylinder (17) so as to align them by said centring plate (24).

16. Method according to any one of claims from 13 to 15, comprising the step of detaching a closing lid (27) from the free portion (11) of the main cylinder (9) prior to the connection with the additional cylinder (17) and reusing said lid for closing the additional cylinder (17).

17. Method according to any one of claims from 13 to 16, comprising the step of screwing the additional stem (30) to a threaded free end of the tractive stem (14).

18. Method according to claim 17, comprising the step of connecting the main piston (12) to the tractive stem (14) by tightening the main piston (12) against a seat of the tractive stem (14) by screwing the additional stem (30) on the threaded free end of the tractive stem (14).

19. Method according to any one of claims from 15 to 18, comprising the step of inserting the additional stem (30) into a central opening (39) of the centring plate so as to obtain a guide and a centring of the additional stem (30) through said centring member.

20. Method according to any one of claims from 13 to 19, comprising the step of connecting the additional stem (30) to the additional piston by screwing.

21. Method according to any one of claims from 13 to 20, comprising the step of connecting ducts (41) for the pressurised fluid of the additional oil-pressure jack (16) to the oil-pressure actuating system (42) of the main oil-pressure jack (8), so as to obtain a synchronised actuation of the main oil-pressure jack (8) and of the additional oil-pressure jack (16) connected to it.

22. Method according to any one of claims from 13 to 21, comprising the step of applying said method to all the main oil-pressure jacks of the welding head(1).

## Patentansprüche

1. Schweißkopf (1) zum Schweißen der Enden von zwei Schienenprofilen, wobei der Schweißkopf (1) umfasst:
- zwei Halbköpfe (2, 3), die miteinander ausgerichtet sind und relativ zueinander in einer Längsrichtung verschiebbar angeordnet sind, wobei ein erster Halbkopf der zwei Halbköpfe (2, 3) Greifmittel zum jeweiligen Greifen eines ersten Profils der zwei Schienenprofile aufweist und ein zweiter Halbkopf der zwei Halbköpfe (2, 3) Greifmittel zum jeweiligen Greifen eines zweiten Profils der zwei Schienenprofile aufweist;
- eine elektrische Schweißschaltung mit wenigstens zwei Elektroden (6) und geeigneten Verbindungsmitteln zum Verbinden einer ersten Elektrode der zwei Elektroden (6) mit dem ersten Profil und einer zweiten Elektrode der zwei Elektroden (6) mit dem zweiten Profil;
- wenigstens einen Öldruckanschluss (8), der einen Hauptzylinder (9), der mit dem ersten Halbkopf verbunden ist und einen freien Abschnitt (11), der von dem ersten Halbkopf in der Längsrichtung vorsteht, ebenso wie einen Hauptkolben (12) hat, der durch ein unter Druck stehendes Fluid im Inneren eines in dem Hauptzylinder (9) ausgebildeten Auflagers (13) verschiebbar ist und durch wenigstens einen Zugschaft (14) mit dem zweiten Halbkopf verbunden ist, so dass der Hauptöldruckanschluss (8) die zwei Halbköpfe (2, 3) entlang der Längsrichtung nahe aneinander bewegen kann,
**dadurch gekennzeichnet, dass** der Schweißkopf (1) einen zusätzlichen Öldruckanschluss (16) umfasst, der mit dem gleichen wenigstens einen Zugschaft (14) verbunden ist, der mit dem Hauptanschluss (8) verbunden ist, wobei der zusätzliche Öldruckanschluss (16) umfasst:
- einen zusätzlichen Zylinder (17) und einen zusätzlichen Kolben, der durch ein unter Druck stehendes Fluid im Inneren eines in dem zusätzlichen Zylinder (17) ausgebildeten Auflagers verschiebbar beweglich ist;
- Mittel zum Verbinden des zusätzlichen Zylinders (17) mit dem freien Abschnitt (11) des Hauptzylinders (9) und Mittel zum Verbinden des zusätzlichen Kolbens (18) mit dem wenigstens einen Zugschaft (14), so dass der zusätzliche Öldruckanschluss (16) dem wenigstens einen Zugschaft (14) eine zusätzliche Zugfestigkeit verleihen kann.

2. Schweißkopf (1) nach Anspruch 1 wobei die Mittel zum Verbinden des zusätzlichen Zylinders (17) mit dem freien Abschnitt (11) des Hauptzylinders (9) einen ersten Verbindungsflansch, der auf ein erstes Außengewinde (20), das auf dem freien Abschnitt (11) des Hauptzylinders (9) ausgebildet ist, schraubbar ist, und einen zweiten Verbindungsflansch, der auf ein zweites Außengewinde, das auf dem zusätzlichen Zylinder (17) ausgebildet ist, schraubbar ist, umfasst, wobei die Verbindungsflansche durch eine Vielzahl von Schrauben (23) miteinander verbindbar sind.

3. Schweißkopf (1) nach Anspruch 1 oder 2, wobei die Mittel zum Verbinden des zusätzlichen Zylinders (17) mit dem freien Abschnitt (11) des Hauptzylinders (9) eine Verbindungsplatte (27) umfassen, die umfasst:
- eine erste Zentrierfläche (25) mit einer Form, die im Wesentlichen komplementär zu einem Auflager (26) für einen Schließdeckel (27) ist, der in dem freien Abschnitt (11) des Hauptzylinders (9) ausgebildet ist und geeignet ist, an dem Auflager (26) anzuliegen;
- eine zweite Zentrierfläche (28), die geeignet ist, an einem Zentrierauflager (29) des zusätzlichen Zylinders (17) anzuliegen, um den zusätzlichen Zylinder (17) mit dem Hauptzylinder (9) auszurichten.

4. Schweißkopf (1) nach einem der vorhergehenden Ansprüche, wobei die Mittel zum Verbinden des zusätzlichen Kolbens mit dem Zugschaft (14) einen zusätzlichen Schaft (30) aufweisen, der mit einem ersten Ende, das dafür gedacht ist, mit dem Zugschaft (14) verbunden zu werden, und einem zweiten Ende (32), das dafür gedacht ist, mit dem zusätzlichen Kolben verbunden zu werden, versehen ist, wobei das erste Ende (31) mit einem Innengewinde (33) versehen ist, welches das Schrauben an den zusätzlichen Schaft (30) auf einem Ende (34) mit Außengewinde des Zugschafts (14) zulässt.

5. Schweißkopf (1) nach Anspruch 4, wobei das erste Ende (31) des zusätzlichen Schafts (30) ausgebildet ist, um eine Mutter (36) zu realisieren, die geeignet ist, den Hauptkolben (12) gegen das Auflager des Zugschafts (14) festzuziehen, um die Verbindung zwischen dem Hauptkolben (12) und dem Zugschaft (14) zu erhalten.

6. Schweißkopf (1) nach Anspruch 4 oder 5, wobei das zweite Ende (32) des zusätzlichen Schafts (30) ein Außengewinde (35) ähnlich dem Außengewinde des freien Endes des Zugschafts (14) aufweist, so dass eine Mutter (36) zum Befestigen des Hauptkolbens (12) an dem Zugschaft (14) verwendet werden kann, um den zusätzlichen Kolben (18) an dem zusätzlichen Schaft (30) zu befestigen.

7. Schweißkopf (1) nach einem der vorhergehenden Ansprüche, wobei ein freier Abschnitt (11) des zusätzlichen Zylinders (17) ein Auflager (38) mit einer Form aufweist, die im Wesentlichen identisch zu dem Auflager (26) für einen Schließdeckel (27) des freien Abschnitts (11) des Hauptzylinders (9) ist, so dass der Schließdeckel (27) des Hauptzylinders (9) zum Schließen der Öffnung des freien Abschnitts (37) des zusätzlichen Zylinders (17) verwendet werden kann.

8. Schweißkopf (1) nach einem der Ansprüche 3 bis 7, wobei die Zentrierplatte (24) eine zentrale Öffnung (39) aufweist, durch welche sich der zusätzliche Schaft (30) erstreckt, so dass die Zentrierplatte (24) auch eine Führung für den zusätzlichen Schaft (30) bildet.

9. Schweißkopf (1) nach einem der Ansprüche 3 bis 8, wobei die Zentrierplatte (24) eine Druckfluidkammer zum Betätigen des zusätzlichen Öldruckanschlusses (16) teilweise begrenzt.

10. Schweißkopf (1) nach einem der vorhergehenden Ansprüche, der ein Kanalsystem (41) für das Druckfluid des zusätzlichen Öldruckanschlusses (16) und Mittel zum Verbinden des Kanalsystems (41) mit dem Öldruck-Betätigungssystem (42) des Hauptöldruckanschlusses (8) umfasst, um eine synchronisierte Betätigung des Hauptöldruckanschlusses (8) und des zusätzlichen damit verbindbaren Öldruckanschlusses (16) zu erhalten.

11. Schweißkopf (1) nach Anspruch 1, wobei der Schweißkopf (1) mit zwei Hauptöldruckanschlüssen (8) ausgestattet ist, die direkt mit zwei Ausrüstungs- bzw. Zubehörteilen (15) zum Erhöhen der Zugfestigkeit der zwei Hauptöldruckanschlüsse (8) verbunden sind.

12. Schweißkopf (1) nach Anspruch 1 oder 11, wobei der Schweißkopf (1) zwei Hauptöldruckanschlüsse (8) umfasst und jeder Hauptanschluss direkt mit einem Zubehörteil (15) verbunden ist, so dass die zusätzlichen Öldruckanschlüsse (16) der Zubehörteile demselben Zugschaft (14) jedes Hauptöldruckanschlusses (8) mehr Zugfestigkeit verleihen können.

13. Verfahren zur Herstellung eines Schweißkopfs (1) zum Schweißen der Enden von zwei Schienenprofilen, das die folgenden Schritte umfasst:
A) Bereitstellen eines Schweißkopfs (1), der umfasst:
- zwei Halbköpfe (2, 3), die miteinander ausgerichtet sind und relativ zueinander in einer Längsrichtung verschiebbar angeordnet sind, wobei ein erster Halbkopf der zwei Halbköpfe (2, 3) Greifmittel zum jeweiligen Greifen eines ersten Profils der zwei Schienenprofile aufweist und ein zweiter Halbkopf der zwei Halbköpfe (2, 3) Greifmittel zum jeweiligen Greifen eines zweiten Profils der zwei Schienenprofile aufweist;
- eine elektrische Schweißschaltung mit wenigstens zwei Elektroden (6) und geeigneten Verbindungsmitteln zum Verbinden einer ersten Elektrode der zwei Elektroden (6) mit dem ersten Profil und einer zweiten Elektrode der zwei Elektroden (6) mit dem zweiten Profil;
- wenigstens einen Öldruckanschluss (8), der einen Hauptzylinder (9), der mit dem ersten Halbkopf verbunden ist und einen freien Abschnitt (11), der von dem ersten Halbkopf in der Längsrichtung vorsteht, ebenso wie einen Hauptkolben (12) hat, der durch ein unter Druck stehendes Fluid im Inneren eines in dem Hauptzylinder (9) ausgebildeten Auflagers (13) verschiebbar ist und durch einen Zugschaft (14) mit dem zweiten Halbkopf verbunden ist, so dass der Hauptöldruckanschluss (8) die zwei Halbköpfe (2, 3) entlang der Längsrichtung nahe aneinander bewegen kann,
B) Bereitstellen eines zusätzlichen Öldruckanschlusses (16), der einen zusätzlichen Zylinder (17) und einen zusätzlichen Kolben, der durch ein unter Druck stehendes Fluid im Inneren eines in dem zusätzlichen Zylinder (17) ausgebildeten Auflagers verschiebbar beweglich ist, umfasst;
C) Verbinden des zusätzlichen Zylinders (17) mit dem freien Abschnitt (11) des Hauptzylinders (9);
D) Verbinden des zusätzlichen Kolbens (18) durch einen zusätzlichen Schaft (30) mit demselben Zugschaft (14), wo der Hauptöldruckanschluss (8) verbunden ist, so dass der zusätzliche Öldruckanschluss (16) demselben Zugschaft (14) eine zusätzliche Zugfestigkeit verleihen kann.

14. Verfahren nach Anspruch 13 wobei bei dem Schritt B) ein erstes Außengewinde (20) auf dem freien Abschnitt (11) des Hauptzylinders (3) ausgebildet wird und ein zweites Außengewinde (35) auf dem zusätzlichen Zylinder (17) ausgebildet wird, und wobei ein erster Verbindungsflansch mit Innengewinde auf das erste Gewinde des Hauptzylinders (9) geschraubt wird und ein zweiter Verbindungsflansch mit Innengewinde auf das zweite Gewinde des zusätzlichen Zylinders (17) geschraubt wird, und wobei die zwei Verbindungsflansche durch eine Vielzahl von Schrauben (23) miteinander verbunden werden, um die Verbindung zwischen dem Hauptzylinder (9) und dem zusätzlichen Zylinder (17) zu erhalten.

15. Verfahren nach Anspruch 13 oder 14, das den Schritt des Anordnens einer Zentrierplatte (24) zwischen dem Hauptzylinder (9) und dem zusätzlichen Zylinder (17) umfasst, um sie durch die Zentrierplatte (24) auszurichten.

16. Verfahren nach einem der Ansprüche 13 bis 15, das den Schritt des Lösens eines Schließdeckels (27) von dem freien Abschnitt (11) des Hauptzylinders (9) vor der Verbindung mit dem zusätzlichen Zylinder (17) und des Wiederverwendens des Deckels zum Schließen des zusätzlichen Zylinders (17) umfasst.

17. Verfahren nach einem der Ansprüche 13 bis 16, das den Schritt des Schraubens des zusätzlichen Schafts (30) an ein freies Gewindeende des Zugschafts (14) umfasst.

18. Verfahren nach Anspruch 17, das den Schritt des Verbindens des Hauptkolbens (12) mit dem Zugschaft (14) umfasst, indem der Hauptkolben (12) gegen ein Auflager des Zugschafts (14) angezogen wird, indem der zusätzliche Schaft (30) auf das freie Gewindeende des Zugschafts geschraubt wird.

19. Verfahren nach einem der Ansprüche 15 bis 18, das den Schritt des Einsetzens des zusätzlichen Schafts (30) in eine zentrale Öffnung (39) der Zentrierplatte umfasst, um eine Führung und eine Zentrierung des zusätzlichen Schafts (30) durch das Zentrierelement zu erreichen.

20. Verfahren nach einem der Ansprüche 13 bis 19, das den Schritt des Verbindens des zusätzlichen Schafts (30) mit dem zusätzlichen Kolben durch Schrauben umfasst.

21. Verfahren nach einem der Ansprüche 13 bis 20, das den Schritt des Verbindens von Kanälen (41) für das Druckfluid des zusätzlichen Öldruckanschlusses (16) mit dem Öldruck-Betätigungssystem (42) des Hauptöldruckanschlusses (8) umfasst, um eine synchronisierte Betätigung des Hauptöldruckanschlusses (8) und des mit ihm verbundenen zusätzlichen Öldruckanschlusses (16) zu erreichen.

22. Verfahren nach einem der Ansprüche 13 bis 21, das den Schritt des Anwendens des Verfahrens auf alle Hauptöldruckanschlüsse des Schweißkopfs (1) umfasst.

## Revendications

1. Tête de soudage (1) permettant de souder les extrémités de deux profils de rail, dans laquelle ladite tête de soudage (1) comprend :
- deux demi-têtes (2, 3) alignées l'une avec l'autre et déplaçables par glissement l'une par rapport à l'autre dans une direction longitudinale, où une première demi-tête des deux demi-têtes (2, 3) présente un moyen d'accrochage permettant de s'accrocher respectivement à un premier profil des deux profils de rail et une seconde demi-tête des deux demi-têtes (2, 3) présente un moyen d'accrochage permettant de s'accrocher respectivement à un second profil des deux profils de rail ;
- un circuit de soudage électrique avec au moins deux électrodes (6) et des moyens de connexion convenables permettant de connecter une première électrode des deux électrodes (6) au premier profil et une seconde électrode des deux électrodes (6) au second profil ;
- au moins un vérin à pression d'huile principal (8) comprenant un cylindre principal (9) connecté à la première demi-tête et ayant une portion libre (11) protubérante depuis la première demi-tête dans la direction longitudinale, ainsi qu'un piston principal (12) déplaçable par glissement par un fluide pressurisé à l'intérieur d'une assise (13) formée dans le cylindre principal (9) et connecté, par au moins une tige de traction (14), à la seconde demi-tête, de sorte que le vérin à pression d'huile principal (8) peut rapprocher les deux demi-têtes (2, 3) le long de la direction longitudinale ;
**caractérisée en ce que** ladite tête de soudage (1) comprend un vérin à pression d'huile additionnel (16) connecté à la même au moins une tige de traction (14) qui est connectée audit vérin principal (8), ledit vérin à pression d'huile additionnel (16) comprenant :
- un cylindre additionnel (17) et un piston additionnel déplaçable par glissement par un fluide pressurisé à l'intérieur d'une assise formée dans le cylindre additionnel (17) ;
- des moyens permettant de connecter le cylindre additionnel (17) à la portion libre (11) du cylindre principal (9) et des moyens permettant de connecter le piston additionnel (18) à ladite au moins une tige de traction (14), de sorte que le vérin à pression d'huile additionnel (16) peut communiquer une résistance à la traction additionnelle à ladite au moins une tige de traction (14).

2. Tête de soudage (1) selon la revendication 1, dans laquelle lesdits moyens permettant de connecter le cylindre additionnel (17) à la portion libre (11) du cylindre principal (9) comprennent une première bride de connexion vissable sur un premier filetage externe (20) formé sur la portion libre (11) du cylindre principal (9) et une seconde bride de connexion vissable sur un second filetage externe formé sur le cylindre additionnel (17), dans laquelle lesdites brides de connexion peuvent être connectées l'une à l'autre par une pluralité de vis (23).

3. Tête de soudage (1) selon la revendication 1 ou 2, dans laquelle lesdits moyens de connexion du cylindre additionnel (17) à la portion libre (11) du cylindre principal (9) comprennent une plaque de centrage (24) comprenant :
- une première surface de centrage (25) de forme sensiblement complémentaire à une assise (26) pour un couvercle de fermeture (27) formé dans la portion libre (11) du cylindre principal (9) et adapté pour venir en buter contre ladite assise (26) ;
- une seconde surface de centrage (28) adaptée pour venir en buter contre une assise de centrage (29) du cylindre additionnel (17), de façon à aligner le cylindre additionnel (17) avec le cylindre principal (9).

4. Tête de soudage (1) selon l'une quelconque des revendications précédentes, dans laquelle lesdits moyens de connexion dudit piston additionnel à la tige de traction (14) comprennent une tige additionnelle (30) pourvue d'une première extrémité destinée à être connectée à la tige de traction (14) et une seconde extrémité (32) destinée à être connectée au piston additionnel, ladite première extrémité (31) étant pourvue d'un filetage interne (33) qui permet le vissage de la tige additionnelle (30) sur une extrémité filetée de manière externe (34) de la tige de traction (14).

5. Tête de soudage (1) selon la revendication 4, dans laquelle ladite première extrémité (31) de la tige additionnelle (30) est formée de façon à réaliser un écrou (36) adapté pour serrer le piston principal (12) contre une assise de la tige de traction (14) pour obtenir la connexion entre le piston principal (12) et la tige de traction (14).

6. Tête de soudage (1) selon la revendication 4 ou 5, dans laquelle la seconde extrémité (32) de la tige additionnelle (30) présente un filetage externe (35) similaire au filetage externe de l'extrémité libre de la tige de traction (14), de sorte qu'un écrou (36) permettant d'attacher le piston principal (12) à la tige de traction (14) peut être utilisé pour attacher le piston additionnel (18) à la tige additionnelle (30).

7. Tête de soudage (1) selon l'une quelconque des revendications précédentes, dans laquelle une portion libre (11) du cylindre additionnel (17) présente une assise (38) de forme sensiblement identique à ladite assise (26) pour un couvercle de fermeture (27) de la portion libre (11) du cylindre principal (9), de sorte que ledit couvercle de fermeture (27) du cylindre principal (9) peut être utilisé pour fermer l'ouverture de la portion libre (37) du cylindre additionnel (17).

8. Tête de soudage (1) selon l'une quelconque des revendications 3 à 7, dans laquelle ladite plaque de centrage (24) comprend une ouverture centrale (39) à travers laquelle ladite tige additionnelle (30) s'étend, de sorte que la plaque de centrage (24) forme également un guide pour la tige additionnelle (30).

9. Tête de soudage (1) selon l'une quelconque des revendications 3 à 8, dans laquelle ladite plaque de centrage (24) délimite en partie une chambre de fluide pressurisée permettant d'actionner ledit vérin à pression d'huile additionnel (16).

10. Tête de soudage (1) selon l'une quelconque des revendications précédentes, comprenant un système de conduit (41) pour le fluide pressurisé du vérin à pression d'huile additionnel (16) et des moyens permettant de connecter ledit système de conduit (41) au système d'actionnement à pression d'huile (42) du vérin à pression d'huile principal (8), de façon à obtenir un actionnement synchronisé du vérin à pression d'huile principal (8) et du vérin à pression d'huile additionnel (16) qui peut lui être connecté.

11. Tête de soudage (1) selon la revendication 1, dans laquelle ladite tête de soudage (1) est équipée de deux vérins à pression d'huile principaux (8) couplés directement à deux accessoires (15) permettant d'augmenter la résistance à la traction des deux vérins à pression d'huile principaux (8).

12. Tête de soudage (1) selon la revendication 1 ou 11, dans laquelle ladite tête de soudage (1) comprend deux vérins à pression d'huile principaux (8) et chaque vérin principal est directement associé à un accessoire (15) de sorte que les vérins à pression d'huile additionnels (16) desdits accessoires peuvent communiquer une résistance à la traction additionnelle à la même tige de traction (14) de chaque vérin à pression d'huile principal (8).

13. Méthode de fabrication d'une tête de soudage (1) permettant de souder les extrémités de deux profils de rail, comprenant les étapes suivantes :
A) fourniture d'une tête de soudage (1) comprenant :
- deux demi-têtes (2, 3) alignées l'une avec l'autre et déplaçables par glissement l'une par rapport à l'autre dans une direction longitudinale, où une première demi-tête des deux demi-têtes (2, 3) présente un moyen d'accrochage permettant de s'accrocher respectivement à un premier profil des deux profils de rail et une seconde demi-tête des deux demi-têtes (2, 3) présente un moyen d'accrochage permettant de s'accrocher respectivement à un second profil des deux profils de rail ;
- un circuit de soudage électrique avec au moins deux électrodes (6) et des moyens de connexion convenables permettant de connecter une première électrode des deux électrodes (6) au premier profil et une seconde électrode des deux électrodes (6) au second profil ;
- au moins un vérin à pression d'huile principal (8) comprenant un cylindre principal (9) connecté à la première demi-tête et ayant une portion libre (11) protubérante depuis la première demi-tête dans la direction longitudinale, ainsi qu'un piston principal (12) déplaçable par glissement par un fluide pressurisé à l'intérieur d'une assise (13) formée dans le cylindre principal (9) et connecté, par une tige de traction (14), à la seconde demi-tête, de sorte que le vérin à pression d'huile principal (8) peut rapprocher les deux demi-têtes (2, 3) le long de la direction longitudinale ;
B) fourniture d'un vérin à pression d'huile additionnel (16) comprenant un cylindre additionnel (17) et un piston additionnel déplaçable par glissement par un fluide pressurisé à l'intérieur d'une assise formée dans le cylindre additionnel (17) ;
C) connexion du cylindre additionnel (17) à la portion libre (11) du cylindre principal (9) ;
D) connexion du piston additionnel par une tige additionnelle (30) à la même tige de traction (14) à laquelle est connecté le vérin à pression d'huile principal (8), de sorte que le vérin à pression d'huile additionnel (16) peut communiquer une résistance à la traction additionnelle à la même tige de traction (14).

14. Méthode selon la revendication 13, dans laquelle à l'étape B), un premier filetage externe (20) est formé sur la portion libre (11) du cylindre principal (9) et un second filetage externe (35) est formé sur le cylindre additionnel (17), et dans laquelle une première bride de connexion filetée de manière interne est vissée sur le premier filetage du cylindre principal (9) et une seconde bride de connexion filetée de manière interne est vissée sur le second filetage du cylindre additionnel (17),
et dans laquelle lesdites deux brides de connexion sont connectées l'une à l'autre par une pluralité de vis (23) de façon à obtenir ladite connexion entre le cylindre principal (9) et le cylindre additionnel (17).

15. Méthode selon la revendication 13 ou 14, comprenant l'étape d'agencement d'une plaque de centrage (24) entre le cylindre principal (9) et le cylindre additionnel (17) de façon à les aligner par ladite plaque de centrage (24).

16. Méthode selon l'une quelconque des revendications 13 à 15, comprenant l'étape de détachement d'un couvercle de fermeture (27) de la portion libre (11) du cylindre principal (9) avant la connexion avec le cylindre additionnel (17) et la réutilisation dudit couvercle pour fermer le cylindre additionnel (17) ;

17. Méthode selon l'une quelconque des revendications 13 à 16, comprenant l'étape de vissage de la tige additionnelle (30) à une extrémité libre filetée de la tige de traction (14).

18. Méthode selon la revendication 17, comprenant l'étape de connexion du piston principal (12) à la tige de traction (14) par serrage du piston principal (12) contre une assise de la tige de traction (14) par vissage de la tige additionnelle (30) sur l'extrémité libre filetée de la tige de traction (14).

19. Méthode selon l'une quelconque des revendications 15 à 18, comprenant l'étape d'insertion de la tige additionnelle (30) dans une ouverture centrale (39) de la plaque de centrage de façon à obtenir un guide et un centrage de la tige additionnelle (30) à travers ledit organe de centrage.

20. Méthode selon l'une quelconque des revendications 13 à 19, comprenant l'étape de connexion de la tige additionnelle (30) au piston additionnel par vissage.

21. Méthode selon l'une quelconque des revendications 13 à 20, comprenant l'étape de connexion de conduits (41) pour le fluide pressurisé du vérin à pression d'huile additionnel (16) au système d'actionnement à pression d'huile (42) du vérin à pression d'huile principal (8), de façon à obtenir un actionnement synchronisé du vérin à pression d'huile principal (8) et du vérin à pression d'huile additionnel (16) qui lui est connecté.

22. Méthode selon l'une quelconque des revendications 13 à 21, comprenant l'étape d'application de ladite méthode à tous les vérins à pression d'huile principaux de la tête de soudage (1).
